# EUROPEAN PATENT SPECIFICATION

(11) **EP 1 563 636 B1**
(45) Date of publication and mention of the grant of the patent: **09.01.2019**
(21) Application number: 03769009.6
(22) Date of filing: 20.11.2003
(51) Int. Cl.: H04L 12/58, H04L 29/06

(54) **METHOD AND APPARATUS FOR SECURE INSTANT MESSAGING UTILIZING SERVER-SUPERVISED PUBLICATION**
VERFAHREN UND VORRICHTUNG FuER SICHERES INSTANTMESSAGING UNTERVERWENDUNG EINER VOM SERVER BEAUFSICHTIGTEN PUBLIKATION
PROCEDE ET APPAREIL POUR L'ECHANGE DE MESSAGES INSTANTANE SECURISE PAR PUBLICATION SUPERVISEE PAR SERVEUR

(30) Priority: 20.11.2002 US 427568 P; 20.02.2003 US 371601; 19.11.2003 US 718290
(43) Date of publication of application: 17.08.2005
(73) Proprietor: Google LLC, Mountain View, CA 94043 (US)
(72) Inventor: HAYES, Terry, N., Los Altos, CA 94022 (US); LORD, Robert, B., San Jose, CA 95125 (US); HOOKER, Jeff, Encinitas, CA 92024 (US); ODELL, James A., Potomac Falls, VA 20165 (US)
(74) Representative: Martin, Philip John
(86) International application number: PCT/US2003/037438
(87) International publication number: WO 2004/047358

(56) References cited:
- EP-A- 1 104 964
- WO-A-03/067809
- US-A- 5 261 002
- US-A- 5 838 792
- US-A- 6 161 180
- US-A1- 2003 204 722
- US-B1- 6 301 609
- US-B1- 6 324 569
- US-B1- 6 348 935
- US-B1- 6 430 602
- US-B1- 6 636 733
- US-B2- 6 674 725
- FONG A C M ET AL: "Towards an open protocol for secure online presence notification" COMPUTER STANDARDS AND INTERFACES, ELSEVIER SEQUOIA. LAUSANNE, CH, vol. 23, no. 4, 1 September 2001 (2001-09-01), pages 311-324, XP004297705 ISSN: 0920-5489
- BRIAN MCWILLIAMS: "AOL Follows Trillian's Lead In Encrypted Messaging" WWW.SECURITYFOCUS.COM, [Online] 13 May 2002 (2002-05-13), XP002545247 Retrieved from the Internet: URL:http://www.securityfocus.com/news/405> [retrieved on 2009-09-09]
- TOM FOUT: "Inside Windows Messenger?How it Communicates" MICROSOFT CORPORATION, [Online] October 2001 (2001-10), XP002545248 Retrieved from the Internet: URL:http://download.microsoft.com/download /2/e/0/2e0e3caf-9005-4058-b3e5-42432655b48 6/PRO/inside.doc> [retrieved on 2009-09-09]
- "Chapter 13: Key Management Techniques ED - MENEZES A; OORSCHOT VAN P; VANSTONE S" HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, [Online] 1 October 1996 (1996-10-01), pages 543-590, XP001525013 ISBN: 978-0-8493-8523-0 Retrieved from the Internet: URL:http://www.cacr.math.uwaterloo.ca/hac/ >
- PASCAL CARRIE: 'Enabling interaction through instant messaging' TRANSACTIONS ON PROFESSIONAL COMMUNICATION vol. 46, no. 2, June 2003, pages 138 - 141, XP002974313
- PARVIAINEN ET AL.: 'Mobile instant messaging' IEEE 2003, pages 425 - 430, XP010637843
- ANONYMOUS: 'VeriSign introduces expanded SMS and MMD messaging services' PR NEWSWIRE, [Online] 24 February 2004, XP002974314 Retrieved from the Internet: <URL:http://proquest.umi.com>

## Description

### BACKGROUND OF THE INVENTION

### Field of the Invention

The present invention relates to methods for people to communicate with each other online. More particularly, the invention concerns a secure synchronous online messaging system.

### Description of the Related Art

The Internet has dramatically changed the way people communicate. As one example, e-mail enables many people across the world asynchronously exchange messages and attached files. E-mail is relayed from source to destination by mail servers of the sender and receiver. In addition to e-mail, people also communicate over the Internet using chat rooms. With chat rooms, a hosting server conducts real-time communications between participants that have affirmatively logged-in to the server in order to make themselves available to chat with any other users that have entered that chat room. Another mode of Internet communications, instant messaging, involves an instant messaging server that works in real-time to relay messages between participants. Unlike chat rooms, participants need not log into a chat room server. Rather, a user's instant messaging software works with the instant messaging server to search for any of the user's preselected instant messaging "buddies" that happen to be online. The user can then invoke the instant messaging server to coordinate one-on-one or group discussions with any one or more of the identified buddies.

Since its introduction, instant messaging has taken the wired world by storm. At home, people use instant messaging to find and conduct friendly online chats with their friends and family. At work, business people use instant messaging to communicate with colleagues, whether located across the country or the same office.

One popular instant messaging service today is AOL Instant Messenger (AIM), which is provided by AMERICA ONLINE INCORPORATED (AOL). AIM is already the subject of various U.S. patents and patent applications. Instant messaging services, such as AIM, represent a significant development in online communications, and therefore enjoy widespread use today. Nonetheless, engineers and software programmers at AOL are still working to enhance and improve the performance, efficiency, and usefulness of today's instant messaging systems. One area of possible focus concerns the security with which instant messages are delivered.

### SUMMARY OF THE INVENTION

Broadly, the present disclosure concerns the conduct of secure synchronous online messages between prescribed subscribers, where digital certificates are utilized to sign and encrypt the messages. The teachings of this disclosure may be implemented as a method, apparatus, logic circuit, signal bearing medium, or a combination of these. This disclosure provides a number of advantages and benefits, which should be apparent from the following description.

### BRIEF DESCRIPTION OF THE DRAWINGS

FIGURE 1 is a block diagram of the hardware components and interconnections of an instant messaging system.
FIGURE 2 is a block diagram of a digital data processing machine.
FIGURE 3 shows an exemplary signal-bearing medium.
FIGURE 4 is a simplified flowchart of a sequence for managing and conducting secured synchronous online messages.
FIGURE 5 is a more detailed flowchart of a sequence for managing and conducting secured synchronous online messages.

### DETAILED DESCRIPTION

The nature, objectives, and advantages of the invention will become more apparent to those skilled in the art after considering the following detailed description in connection with the accompanying drawings.

### HARDWARE COMPONENTS & INTERCONNECTIONS

### Introduction

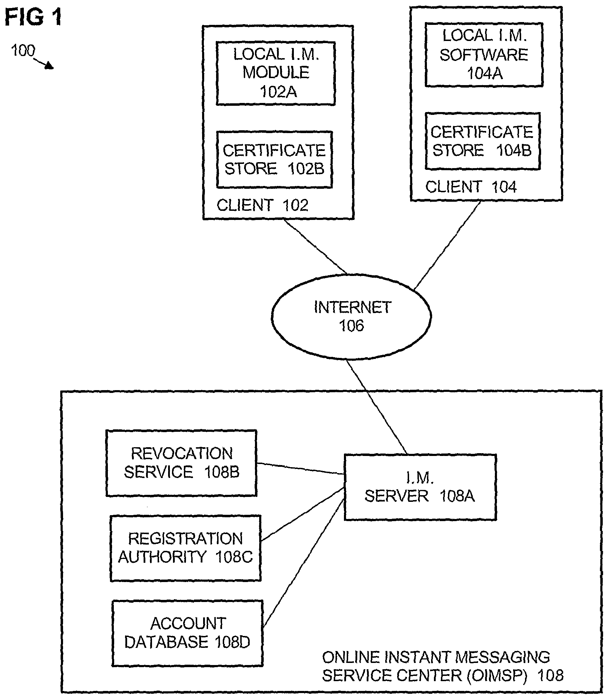

One aspect of the present disclosure concerns an instant messaging system, which may be embodied by various hardware components and interconnections, with one example being described in FIGURE 1. The system 100 includes various subcomponents, each of which may be implemented by one or more hardware devices, software devices, a portion of one or more hardware or software devices, or a combination of the foregoing. The makeup of these subcomponents is described in greater detail below, with reference to an exemplary digital data processing apparatus, logic circuit, and signal bearing medium.

The system 100 as illustrated includes two clients, although in practice there may be hundreds and thousands of clients. The system also includes the Internet 106 and an online instant messaging center 108. Broadly, the clients 102, 104 connect to the center 108 via the Internet 106, whereupon the center 108 assists in conducting instant messages between the clients 102, 104.

### Clients

The clients 102, 104 comprise personal computers, web-enabled phones, personal data assistants (PDAs), or other digital data processing devices. The clients 102, 104 may also be referred to as "subscribers" to the instant messaging service of 108. In a typical operating environment, each client 102, 104 is operated by a human "user" (not shown).

Each client 102, 104 includes various subcomponents related to the normal operation of that client device, as would be apparent to an ordinarily skilled artisan familiar with that device. In addition to these subcomponents, each client 102 (or 104) includes some components related to the present disclosure, including a local instant messaging module 102a (or 104a) and a certificate store 102b (or 104b).

Each module 102a/102b comprises a software module, routine, thread, or other local programming to send and receive instant messages. As discussed below, text messages from the clients proceed to the center 108, which forwards the message to the appropriate recipient client. Files and other such attachments may be relayed by the center 108, or exchanged more directly between the clients 102/104 as discussed in greater detail below. The certificate store 102b comprises magnetic disk storage, circuit memory, or other volatile or nonvolatile storage media to store digital security certificates and related information, as described in further detail below. The certificate store 102b may be local to the client 102 (as illustrated), or as an alternative, it may be contained in a remote or central site accessible by network, Internet, or other link.

### Online Instant Messaging Service Center

Basically, the center 108 supervises the exchange of instant messages between the clients 102, 104, and may even conduct certain messages. In addition, the center 108 enrolls clients for messaging services, authenticates clients, manages security certificates, and performs other tasks related to the activities of instant messaging.

The center 108 includes various computing components related to the normal operation of an online instant messaging service center, as would be apparent to an ordinarily skilled artisan familiar with online instant messaging systems. Basically, the center 108 includes an instant messaging server 108a, revocation service 108b, registration authority 108c, and account database 108d.

The server 108a comprises a digital data processing apparatus such as one or more personal computers, computer workstations, mainframe computers, computing networks, etc. The server 108a, in one example, comprises a cluster of different server machines programmed to authenticate client machines and relay their instant message traffic.

The items 108b-108d may be separate units, or one or more may be part of the server machinery or part of each other's equipment. The revocation service 108b is software program, thread, subroutine, microprocessor, computer, application specific integrated circuit (ASIC), or other operational entity that performs various functions (described below) to manage the revocation of security certificates. As one example, the service 108b may operate by utilizing online certificate status protocol (OSCP), maintaining a current certificate revocation list (CRL), gathering data from the registration authority 108c and server 108a and clients 102/104, or other techniques. The registration authority 108c manages the registration of clients for secured instant messaging service, and in particular, the issuance of digital certificates for use by the clients. The authority 108c may be implemented by a suitable software program, thread, subroutine, microprocessor, computer, application specific integrated circuit (ASIC), etc. The authority 108c may comprise an independent certificate issuing agency, or an online certificate storefront connected to VERISIGN or another entity in the business of providing online digital certificates and security information. The account database 108d comprises magnetic disk storage, circuit memory, or other volatile or nonvolatile storage media to store data related to instant messaging accounts. For instance, the account database 108d contains each instant messaging user's screen name, password, and level of service paid-for (e.g., secured or unsecured). The publication record 108e stores clients certificates, certificate chains, revocation information, and other data relating to clients' use of digital certificates.

### Exemplary Digital Data Processing Apparatus

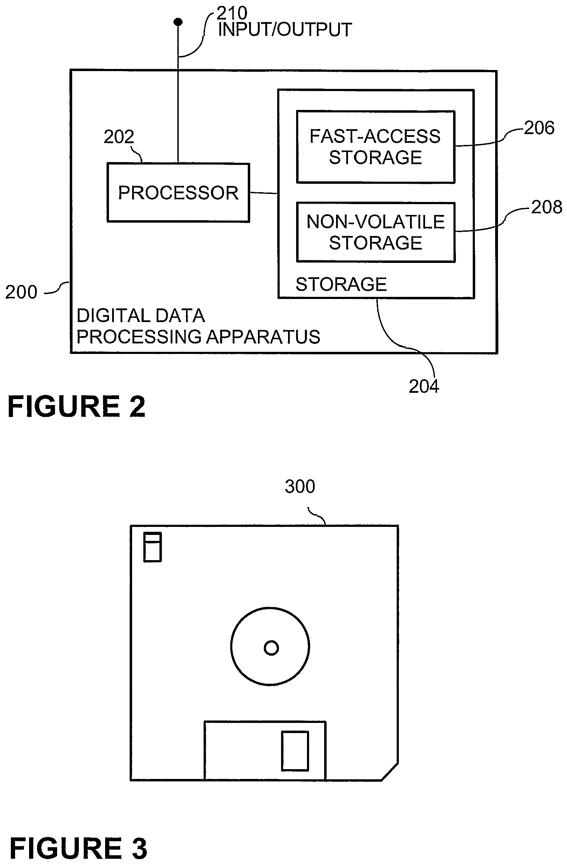

As mentioned above, data processing entities such as the clients 102, 104, server 108a, revocation service 108b, registration authority 108c, and the like may be implemented in various forms. One example is a digital data processing apparatus, as exemplified by the hardware components and interconnections of the digital data processing apparatus 200 of FIGURE 2.

The apparatus 200 includes a processor 202, such as a microprocessor, personal computer, workstation, controller, microcontroller, state machine, or other processing machine, coupled to a storage 204. In the present example, the storage 204 includes a fast-access storage 206, as well as nonvolatile storage 208. The fast-access storage 206 may comprise random access memory ("RAM"), and may be used to store the programming instructions executed by the processor 202. The nonvolatile storage 208 may comprise, for example, battery backup RAM, EEPROM, flash PROM, one or more magnetic data storage disks such as a "hard drive", a tape drive, or any other suitable storage device. The apparatus 200 also includes an input/output 210, such as a line, bus, cable, electromagnetic link, or other means for the processor 202 to exchange data with other hardware external to the apparatus 200.

Despite the specific foregoing description, ordinarily skilled artisans (having the benefit of this disclosure) will recognize that the apparatus discussed above may be implemented in a machine of different construction, without departing from the scope of the invention. As a specific example, one of the components 206, 208 may be eliminated; furthermore, the storage 204, 206, and/or 208 may be provided on-board the processor 202, or even provided externally to the apparatus 200.

### Logic Circuitry

In contrast to the digital data processing apparatus discussed above, a different embodiment of this disclosure uses logic circuitry instead of computer-executed instructions to implement one or more of the functional entities mentioned above. Depending upon the particular requirements of the application in the areas of speed, expense, tooling costs, and the like, this logic may be implemented by constructing an application-specific integrated circuit (ASIC) having thousands of tiny integrated transistors. Such an ASIC may be implemented with CMOS, TTL, VLSI, or another suitable construction. Other alternatives include a digital signal processing chip (DSP), discrete circuitry (such as resistors, capacitors, diodes, inductors, and transistors), field programmable gate array (FPGA), programmable logic array (PLA), programmable logic device (PLD), and the like.

### OPERATION

Having described the structural features of the present disclosure, the operational aspect of the disclosure will now be described.

### Signal-Bearing Media

Wherever the functionality of any operational components of the disclosure is implemented using one or more machine-executed program sequences, these sequences may be embodied in various forms of signal-bearing media. In the context of FIGURE 2, such a signal-bearing media may comprise, for example, the storage 204 or another signal-bearing media, such as a magnetic data storage diskette 300 (FIGURE 3), directly or indirectly accessible by a processor 202. Whether contained in the storage 206, diskette 300, or elsewhere, the instructions may be stored on a variety of machine-readable data storage media. Some examples include direct access storage (e.g., a conventional "hard drive", redundant array of inexpensive disks ("RAID"), or another direct access storage device ("DASD")), serial-access storage such as magnetic or optical tape, electronic nonvolatile memory (e.g., ROM, EPROM, flash PROM, or EEPROM), battery backup RAM, optical storage (e.g., CD-ROM, WORM, DVD, digital optical tape), paper "punch" cards, or other suitable signal-bearing media including analog or digital transmission media and analog and communication links and wireless communications. In one embodiment, the machine-readable instructions may comprise software object code, compiled from a language such as assembly language, C, etc.

### Logic Circuitry

In contrast to the signal-bearing medium discussed above, some or all functional components may be implemented using logic circuitry, instead of using a processor to execute instructions. Such logic circuitry is therefore configured to perform operations to carry out the method of the disclosure. The logic circuitry may be implemented using many different types of circuitry, as discussed above.

### Overall Sequence of Operation

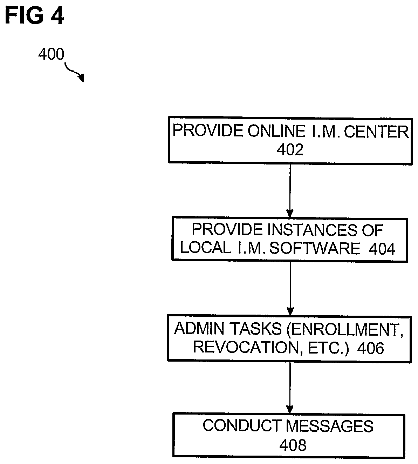

FIGURE 4 shows a sequence 400 to illustrate one example of the method aspect of this disclosure. Broadly, this sequence illustrates a method for conducting secure synchronous online messages between prescribed subscribers by utilizing digital certificates to sign and encrypt the messages. For ease of explanation, but without any intended limitation, the example of FIGURE 4 is described in the context of the system 100 described above.

Step 402 provides the center 108 for use by the clients. For example, technicians, engineers, software programmers, or other personnel in step 402 construct, install, configure, activate, or otherwise make the center 108 available for use by prescribed subscribers such as the clients 102, 104. Step 404 provides local instant messaging modules 102a, 104a for installation by the clients 102, 104. For example, in the illustrated example where the modules 102a/104a constitute software, the center 108 may make the software available online for Internet download, personnel may mail out storage media containing the software to potential subscribers, devices may be sold with the software pre-loaded, etc. The center 108 (of step 402) and software (of step 404) are configured to cooperatively utilize digital certificates to sign, encrypt, and exchange online synchronous messages between groups of two or more dialoging subscribers.

In step 406, the center 108 performs various administrative tasks related to the clients, including enrolling clients to participate in instant messaging service, providing clients with security indicia such as digital certificates, revoking digital certificates under prescribed circumstances, notifying clients of others clients certificate status, and other such operations. The clients 102, 104 also cooperate in the activities of step 406 where applicable.

In step 408, the clients 102, 104 exchange instant messages. In the case of text messages, the center 108 acts as a hub, receiving and relaying instant messages to the proper recipients. In the case of file exchange, these may be exchanged more directly between the clients 102/104, apart from the center 108 if desired. The center 108 and software 102a, 104a cooperatively utilize digital certificates to sign, encrypt, and exchange online synchronous messages between dialoging subscribers. These secure "messages" include message content as well as any attachments.

### More Detailed Example

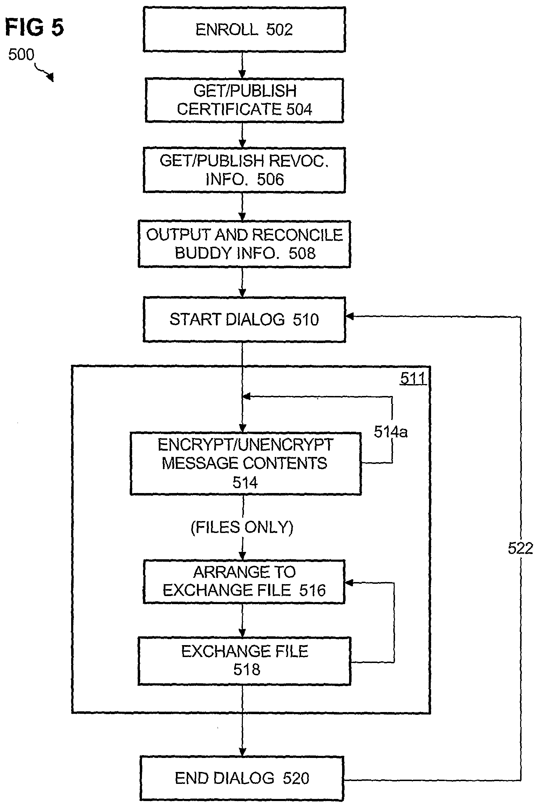

FIGURE 5 shows a sequence 500 to illustrate the operations of the center 108 and the clients from enrollment through instant message exchange. The steps 500 utilize more detail to explain the events of steps 406-408, which were discussed above. As with the sequence 400, the present sequence 500 is explained in the context of the system 100, without any intended limitation. Even more particularly, the sequence 500 is discussed in the context of the client 102 as an exemplary client.

In step 502, the client 102 enrolls in the secured instant messaging service of the center 108. As one example of enrollment, the local IM module 102a may detect the user's first activation of the module 102a, namely the user's first attempt to use instant messaging after software installation, and respond by providing a pop-up window or other opportunity for the user to start the enrollment process. As another example, the module 102a may provide a menu entry, icon, periodic pop-up reminder, or other opportunity for the user to engage in enrollment some time in the future.

When the user decides to initiate enrollment, the module 102a must connect to (or already be connected to) the IM server 108a. Connection to the server 108a occurs by the module 102a contacting the server 108a via the Internet 106 and submitting a prescribed screen name and password (or other log-in indicia), whereupon the server 108a authenticates the user according to the account database 108d. The screen name/password may be specific to instant messaging service, or it may be universally used for other services such as e-mail, Internet service, etc. After connecting to the server 108a, the module 102a sends the server 108a a request to enroll in secured instant messaging.

The server 108a responds by enrolling the client 102 in secured instant messaging, which includes coordinating client payment (if any) by appropriate means such as credit card, invoice, online electronic payment, check, etc. The server 108a updates the account database 108d to reflect the client 102's enrollment in secured instant messaging, and notifies the client 102 of the successful enrollment.

Continuing in step 502, at some point the module 102a attempts to locate an existing security certificate (if any) in the local certificate store 102b. This may be conducted manually under direction of the user, automatically during enrollment, upon the first post-enrollment activation of the local instant messaging module 102a, by the client 102 machine as prompted by the server 108a's notification of successful enrollment, or at another appropriate time. If the module 102a does not find a local certificate, the module 102a will only conduct instant messages in a non-secure mode. In this case, when the user subsequently desires to start using encrypted instant messaging, the user may direct the module 102a to request a certificate from the server 108a, or the user may obtain a digital certificate independently of the center 108.

Whenever the user desires to obtain a certificate via the center 108, the user directs the module 102a to obtain a certificate, or approves the module's prompting of the user for such. The module 102a's certificate request, submitted to the server 108a, includes the user's screen name and password along any other relevant identifying information. The server 108a verifies the user's screen name and password in the account database 108d and also verifies that the user has enrolled for secure instant messaging. The server 108a then routes the certificate request to the registration authority 108c, which may be a component of the messaging service center 108 (as illustrated) or a third party service provider such as VERISIGN, etc. Ultimately, the registration authority 108c sends the client 102 a digital security certificate. In the illustrated example, each certificate may include a signed piece of data including a public key, the user's name (such as screen name or instant messaging account ID), and other such data. The certificate may also include a certificate chain, representing the certificate's path of origination. Finally, the client 102 stores the new certificate in the local store 102b, and then the module 102a automatically or manually recognizes the certificate for future use.

Generally, the content, issuance, and use of digital security certificates for public/private key encryption are well known in the relevant art. For example, public key encryption techniques such as RSA, Diffie-Hellman, and others are widely used. The following U.S. Patents, incorporated by reference, describe various public key encryption techniques: (1) U.S. Patent No. 4,200,770 to Hellman et al. entitled Cryptographic Apparatus and Method, (2) U.S. Patent No. 4,218,582 to Hellman et al. entitled Public Key Cryptographic Apparatus and Method, (3) U.S. Patent No. 4,405,829 to Rivest et al. entitled Cryptographic Communications System and Method, and (4) U.S. Patent No. 4,424,414 to Hellman et al. entitled Exponentiation Cryptographic Apparatus and Method.

After step 502, step 504 starts an instant messaging session and steps 510-520 conduct an instant messaging dialog. A "session" refers to a period of two-way communications between a client and the server 108a while the client is logged-in with the ability to start exchanging instant messages with one or more other clients. A "dialog" refers to the connection between two or more clients via the server 108a, in which the clients actually exchange instant messages.

As mentioned above, step 504 begins a "session" between the client 102 and the server 108a. The session may start by the client 102 submitting, and the server 108a authenticating, the client's screen name, password, etc. Next, the client 102 publishes its user's digital certificate as condition to establishing communications with other clients such as 104. This may occur automatically when the session is established, or manually under user direction. Under various circumstances, publication may also be instituted at a later time, for example, where (1) the user decided not to publish at the time of starting an instant messaging session, (2) the client was unable to publish because the client's certificate was logically unavailable, e.g., locked by the user or another process running on the client, (3) the client was unable to publish because the certificate was physically unavailable, e.g., the certificate was located on smart card, floppy disk, or other removable media that was absent from the client machine, or (4) other circumstances. In the previous instances, publication may be conducted automatically, for example when the module 102a senses that the certificate is available, or manually when the user affirmatively directs the module 102a to publish.

When publication is instituted, the module 102a starts by determining whether there is an existing security certificate in the store 102b. According to one optional implementation of step 504, the module 102a may automatically search the client machine 102 or other user-designated sites for an existing user certificate to utilize, instead of obtaining a new certificate from the authority 108c. As another option, the module 102a may prompt the user to manually identify an existing certificate to import. For example, the user may already possess certificates for use in other programs, unrelated to the subject instant messaging application.

After locating the proper certificate, the module 102a proceeds by sending the certificate (including its certificate chain) to the server 108a. The server 108a temporarily stores the certificate and the certificate chain in the publication record 108e in association with the client's current session. The sending of the certificate to the server and subsequent storage therein may be referred to as "publishing" the certificate. To conserve storage space at the server 108a, the server may be programmed to recognize when different users have identical certificate chains, and in this case to abbreviate storage of the identical chains by representing duplicative certificate chains using pointers, abbreviations, or other shortened codes. When other clients activate their respective instant messaging modules (such as 104a) to begin a session, in step 504 or another earlier or later time, similar acts are performed to publish their certificates.

Optionally, each client may publish more than one certificate to the server 108a. For example, contents of one certificate may be used to sign instant messages and contents of another certificate may be used to encrypt instant messages.

The server 108a's storage of the client 102's certificate and certificate chain is temporary (as mentioned above), because the server 108a automatically removes the client's stored certificate and certificate chain when the client's session ends. Under one embodiment, the module 102a may relay a user's request to un-publish the current published certificate(s). In this case, the server 108a responds by removing the user's certificate from temporary storage, so that the user is not shown as being published. The module 102a may also trigger un-publication whenever the module 102a finds that the user's certificate is logically or physically unavailable.

After step 504, step 506 obtains and publishes revocation information for the client's security certificate. Generally, in publishing revocation information, a client asks the certificate issuer to affirm that the certificate is still valid, and notifies the server 108a of the results. Publishing revocation information is a different operation than publishing the client's certificate, but the two may be performed together and the publication of revocation information may also be performed whenever the user starts an instant messaging session. This entails the module 102a sending the server 108a a request to check status of the client 102's certificate at the revocation service 108b (or other, third party certificate issuer) in regard to possible revocation.

Revocation may occur in various circumstances. One example is where a user reports that the user's key has been compromised. Another example is where the screen name, identity, or other data in the certificate becomes invalid.

The server 108a forwards the request to the issuer of the certificate, which in the present example, is the revocation service 108b. The service 108b responds by providing the server 108a with certain revocation information for the user's certificate. The revocation information, for example, may include an affirmation that the certificate is presently valid and indicating when it will expire. This may be conducted, for example, according to the well known OCSP model. In the case where the revocation service 108b is a service of the center 108 (as illustrated), the server 108a completes publication of the revocation information by storing the information in the publication record 108e and also forwarding this data to the requesting module 102a.

In contrast, where a third party (non-center 108) revocation service is used, and revocation data arrives at the module 102a independent of the server 108a, the module 102a publishes the revocation information by transmitting it to the sever 108a with a request to publish the information, whereupon the server 108a stores the revocation data in the publication record 108e.

When the subscriber's certificate expires (as shown by the revocation information), the server 108a automatically removes the certificate and its related data from the publication record 108e.

Optionally, the module 102a may store the revocation information in the store 102b for the purpose of reusing the revocation information in a later session (without having to re-obtain and re-publish the revocation information) as long as the validity time period requirements are still met. As mentioned above, the client may publish revocation information along with the certificate; alternatively, if the certificate was already published, for example in step 504, the module 102a may withhold the certificate from its request to publish revocation information in step 506. Also occurring in step 506 (or at a previous time), other clients such as 104 perform similar acts to obtain and publish their respective revocation information.

In the embodiment where the client 102 publishes multiple certificates to the server 108a, revocation information may contain data about all of the certificates (one example), or separate revocation information may be published for each of the user's certificate (another example).

In step 508, the module 102a submits a request for "buddy information," namely, information about other users preselected by the user as candidates for future instant messaging sessions. In response to the request, the server 108a searches the publication record 108e to determine which buddies are online, that is, which buddies have already published their buddy information, with or without a certificate, to the server 108a in order to begin an instant messaging session. Then the server 108a provides a buddy listing to the client 102, this listing including an identification of which of the particular client's buddies are online, an abbreviated representation of each located buddy's valid certificate (if any), and the certificate's revocation information (or an abbreviated version of it). If the publication record 108e reveals that a buddy's certificate is invalid, the server 108a may withhold the certificate from the client 102 in order to prevent the client 102 from engaging in secured communications with that buddy.

As an example, the abbreviated certificate may be prepared by processing the certificate with a hash, digest, encryption, or other algorithm that can be replicated with the same results at the client machines. As an alternative to the foregoing "pull" example, the server 108a may provide buddy information automatically ("push"), without regard for whether a client request has been received.

At any rate, throughout the client's instant messaging session with the server 108a, the server 108a may from time to time distribute updated buddy information to the client 102 in order to reflect newly published certificates of the client 102's buddies, expiration of certificates for on-line buddies, etc.

Also in step 508, the module 102a reconciles buddy information where appropriate. For each buddy that the server 108a lists with a security certificate, the module 102a determines whether it contains a certificate for that buddy in its store 102b. If there is no locally stored certificate, the module 102a requests that buddy's certificate from the server 108a. On the other hand, if there is a locally stored certificate for a buddy, the module 102a applies the predetermined algorithm (hash, digest, etc.) to the locally stored certificate and compares the results to the abbreviation received from the server 108a in the buddy list. If they do not match, the module 102a requests an updated certificate from the server 108a.

After step 508, the user starts a dialog with one or more buddy clients in step 510. For ease of discussion, the targeted buddy in this example is the user of client 104. More particularly, in step 510 the user selects an appropriate software icon, menu entry, or other feature instructing the module 102a to initiate a dialog with the client 104. In the interest of brevity, further details are omitted regarding the commencement of an unsecured instant messaging dialog between clients, as various embodiments are already known to those of ordinary skill in the art.

Having initiated the instant messaging dialog (step 510), secured communications are relayed between the dialoguing clients in step 511. In step 514, the local modules 102a/104a may exchange secured instant messages using the server 108a as a relay. The messages are instant, or in other words "synchronous" because they are delivered from client to client in substantial real time, as opposed to asynchronous message delivery means such as e-mail. As a condition to exchanging secured text messages, each local module 102a/104a may first verify that the other client's certificate is not un-published, revoked, or otherwise invalid. This information may be obtained from the server 108a, for example in step 508 as discussed above, or directly from the certificate issuer. If one client's certificate is invalid, the other local module refrains from secured communications with that client. The server 108a may also act as a gate, preventing any exchange of secured text messages with the buddy client 104 if that client's certificate is or becomes invalid, un-published, revoked, etc.

In the case where each client possesses the other client's valid and published certificate, secured communications are therefore possible. Accordingly, dialoguing modules 102a/104a use their respective certificate information to sign and encrypt message contents for sending to the other, and the modules 102a/104a use the other module's certificate information to verify authenticity and decrypt arriving messages. As one example, text messages may utilize be formatted and assembled using a protocol such as S/MIME or PGP. Further details of encryption using public/private key algorithms, digital signatures, and related techniques are omitted, as they will be apparent to ordinarily skilled artisans having the benefit of this disclosure. Step 514 is repeated 514a as necessary, as individual messages are encrypted, sent, received, and decrypted. Secured text messages are relayed between the clients 102/104 by the server 108a.

In addition to the exchange of secured messages (step 514), the clients may also exchange secured files (step 516). This is shown after step 516 for purposes of illustration, although steps 514/516 may actually occur concurrently or in the opposite order. Depending upon the desired implementation of step 516, files may be exchanged independently from text messages, or as secured attachments to secured instant messages. Broadly, in steps 516 the clients arrange for secured file transfer, and in step 518 the clients exchange the secured file.

More particularly, the clients 102, 104 in step 516 make arrangements to exchange a secured file. In the present embodiment, arrangements to exchange the secured file are made by the modules 102a/102b exchanging secured instant messages, which may be invisible to the clients' users. More particularly, the originating module 102a sends a proposal instant message to the module 104a proposing a file transfer; the server 108a delivers the proposal instant message to the module 104a; the module 104a accepts the proposal, sending an acceptance instant message that is forwarded to the module 102a by the server 108a. After accepting the first client's proposal, the second module 104a prepares to receive the secured file.

After preparations for file transfer have been completed in step 516, the clients 102, 104 exchange the file in step 518. The file may be relayed directly between clients, or via an intermediary. Direct exchange may employed, for example, to conserve resources of the potential intermediary. One example of direct client-to-client communications is secure socket layer (SSL) communications. SSL is widely known in the art, as described in a variety of AOL patents such as U.S. Patents 5,657,390 and 5,671,279, incorporated by reference. Other examples of direct client-to-client protocols include virtual private network (VPN) protocols such as IPSEC, etc. Instead of direct relay, the clients may exchange the file via the server 108a or a third party rendezvous server (which is used when one or both of the clients are located behind a firewall preventing direct file exchanges). In any case, the file is exchanged using the certificates to ensure authenticity and using the certificate's keys for encryption.

Steps 516-518 may be repeated as needed to exchange as many secured files as desired. In addition, step 514 may be repeated as desired to exchange as many secured text messages as desired. The dialog ends (step 520) when one or both clients 102, 104 direct their modules 102a/104a to end the dialog. The client 102's instant messaging session may persist or it may be concluded independently of terminating the dialog with client 104. To start a new dialog with the same or a different client, the client 102 returns (522) to step 510.

### OTHER EMBODIMENTS

While the foregoing disclosure shows a number of illustrative embodiments, it will be apparent to those skilled in the art that various changes and modifications can be made herein without departing from the scope of the invention as defined by the appended claims. Furthermore, although elements of the invention may be described or claimed in the singular, the plural is contemplated unless limitation to the singular is explicitly stated. Additionally, ordinarily skilled artisans will recognize that operational sequences must be set forth in some specific order for the purpose of explanation and claiming, but the present invention contemplates various changes beyond such specific order.

In addition, those of ordinary skill in the relevant art will understand that information and signals may be represented using a variety of different technologies and techniques. For example, any data, instructions, commands, information, signals, bits, symbols, and chips referenced herein may be represented by voltages, currents, electromagnetic waves, magnetic fields or particles, optical fields or particles, other items, or a combination of the foregoing.

Moreover, ordinarily skilled artisans will appreciate that any illustrative logical blocks, modules, circuits, and process steps described herein may be implemented as electronic hardware, computer software, or combinations of both. To illustrate one exemplary embodiment, various functional aspects of the invention have been described in terns of illustrative components, blocks, modules, circuit, and steps. Whether such functionality is implemented as hardware, software, or both depends upon the particular application and design constraints imposed on the overall system. Skilled artisans may implement the described functionality in varying ways for each particular application without such implementation decisions departing from the scope of the present invention.

## Claims

1. A method of managing exchange of secure online instant messages between subscriber devices (102, 104), where the secure messages are signed and encrypted using subscribers' digital certificates, the method comprising steps of:
receiving, at a messaging server (108a) a certificate request from a local instant messaging module (102a, 104a) of a subscriber device (102, 104);
routing the certificate request by the messaging server to a registration authority and sending a digital security certificate to the subscriber device (102, 104) from the registration authority (108c);
responsive to a log in request from at least one subscriber to begin a session of exchanging synchronous online messages, the messaging server (108a) temporarily storing the certificate of the subscriber device in a publication record (108e) in association with the subscriber device (102, 104) as long as the instant messaging module (102a, 104a) remains logged-in to the messaging server (108a);
responsive to prescribed events, the messaging server (108a) providing logged-in subscriber devices (102, 104) with selected information concerning certificates of other subscriber devices (102, 104);
responsive to the subscriber device (102, 104) ending the session, the messaging server (108a) automatically removing the certificate from the publication record (108a) for the subscriber device (102, 104);
receiving, at the messaging server (108a), a request to un-publish the certificate from the local instant messaging module (102a, 104a) of the subscriber device (102, 204);
responsive to receiving the request to un-publish the certificate, the messaging server (108a) removing the certificate from the publication record (108e) for the subscriber device (102, 104);
identifying, by the messaging server (108a), other logged-in subscriber devices (102, 104) that previously designated the subscriber device (102, 104) for potential future secured instant messaging; and
notifying the identified other logged-in subscriber devices (102, 104) that the certificate for the subscriber device (102, 104) is withdrawn from use.

2. The method of claim 1, the operation of, responsive to prescribed events, providing logged-in subscriber devices (102, 104) with selected information concerning certificate status of other subscriber devices (102, 104) comprising:
responsive to a request from one subscriber device (102, 104) to establish a dialog with another subscriber device (102, 104), the messaging server (108) providing the requesting subscriber device (102, 104) with a representation of a digital certificate of the other subscriber device (102, 104) from the publication record (108e).

3. The method of claim 1, the operation of, responsive to prescribed events, providing logged-in subscriber devices (102, 104) with selected information concerning certificate status of other subscriber devices (102, 104) comprising:
responsive to a request to publish a new certificate received from the subscriber device (102, 104) providing the other logged-in subscriber devices (102, 104) with a representation of the new certificate.

4. The method of claim 1, further comprising:
the subscriber device (102, 104) submitting the request to un-publish the certificate in response to at least one of the following events: (1) physical unavailability of the certificate, (2) logical unavailability of the certificate, (3) user election to un-publish the certificate.

5. The method of claim 1, the operation of, responsive to prescribed events, providing logged-in subscriber devices (102, 104) with selected information concerning certificate status of other subscriber devices (102, 104) comprising:
responsive to a request from a first subscriber device (102, 104) to establish a dialog with a second subscriber device (102, 104), the messaging server (108a) denying provision a certificate of the second subscriber device (102, 104) to the first subscriber device (102, 104) when the certificate of the second subscriber device (102, 104) has experienced one or more of the following actions: invalidity, revocation, un-publication.

6. The method of claim 1, further comprising:
the subscriber device (102, 104) delaying submittal of the request to publish the certificate to the messaging server (108a) under preventive circumstances including at least one of the following: (1) physical unavailability of the certificate, (2) logical unavailability of the I certificate, (3) user election to delay publication of the certificate.

7. The method of claim 6, further comprising:
the subscriber device (102, 104) automatically submitting the request to publish the certificate when the preventive circumstances terminate.

8. The method of claim 1, the operation of, responsive to prescribed events, providing logged-in subscriber devices (102, 104) with information concerning certificate status of other subscriber devices (102, 104) comprising:
responsive to a published certificate of a particular subscriber device (102, 104) becoming invalid, the messaging server (108a) identifying other logged-in subscriber devices (102, 104) that previously designated the particular subscriber device (102, 104) for potential future secured instant messaging, and notifying the identified other subscriber devices (102, 104) of the published certificate of the particular subscriber device (102, 104) becoming invalid.

9. The method of claim 1, the operation of temporarily storing the certificate additionally storing a representation of a chain record pertaining to the certificate, where storage of repetitive chain records are abbreviated to conserve storage space.

10. The method of claim 1, the subscriber device (102, 104) conditioning submittal of the request to publish the certificate on one or more of the following conditions: (1) automatically in response to logging in to the messaging server (108a), (2) manually in response to operator direction.

11. The method of claim 1, further comprising:
at one or more logged-in subscriber devices (102, 104), an associated local instant messaging module (102a, 104a) submitting a request to un-publish an associated certificate to the messaging server (108a) responsive to specified conditions; and
responsive to each request received from a logged-in subscriber device (102, 104) to un-publish an associated certificate, the messaging server (108a) removing the associated certificate from the publication record (108e).

12. The method of claim 1, further comprising:
receiving (506), at the messaging server (108a), revocation information for the certificate with the request to publish the certificate; and
upon expiration of the certificate as indicated by the revocation information, removing the certificate from the publication record (108e).

13. The method of claim 1, further comprising:
obtaining, at a local instant messaging module (102a, 104a) of another subscriber device (102, (104) revocation information for the digital certificate corresponding to the subscriber device (102, 104); and
the messaging server (108a) temporarily storing the revocation information in the publication record (108e) in association with the subscriber device (102, 104) as long as the instant messaging module (102a, 104a) of the subscriber device (102, 104) remains logged-in to the messaging server (108a).

14. The method of claim 13, further comprising:
the local instant messaging module (102a, 104a) of the other subscriber device (102, 104) storing the revocation information, as long as the certificate is still valid; and
the local instant messaging module (102a, 104a) of the other subscriber device (102, 104) utilizing the revocation information in future sessions to avoid having to re-obtain the revocation information as long as the certificate is still valid.

15. The method of claim 1, further comprising:
prior to engaging in secured communications with another subscriber device (102, 104), the local instant messaging module (102a, 104a) communicating with the messaging server (108a) to determine whether a certificate of the other subscriber device (102, 104) is valid; and
the local instant messaging module (102a, 104a) refraining from secured synchronous communications with the other subscriber device (102, 104) when the certificate of the other subscriber device (102, 104) is invalid.

16. A messaging server (108a) to manage an exchange of secure online instant messages between subscriber devices (102,104), where secure messages are signed and encrypted using subscribers' digital certificates, the messaging server (108a) comprising:
means for receiving a certificate request from a local instant messaging module (102a, 104a) of a subscriber device (102, 104);
means for routing the certificate request to a registration authority and for sending a digital security certificate to the subscriber device (102, 104) from the registration authority (108c);
means for, responsive to a log in request from at least one subscriber to begin a session of exchanging synchronous online messages, temporarily storing the certificate of the subscriber device in a publication record (108e) in association with the subscriber device (102, 104) as long as the instant messaging module (102a, 104a) remains logged-in to the messaging server (108a);
means for, responsive to prescribed events, providing logged-in subscriber devices (102, 104) with selected information concerning certificates of other subscriber devices (102, 104);
means for, responsive to the subscriber device (102, 104) ending the session, automatically removing the certificate from the publication record (108a) for the subscriber device (102, 104);
means for receiving a request to un-publish the certificate from the local instant messaging module (102a, 104a) of the subscriber device (102, 204);
means for, responsive to receiving the request to un-publish the certificate, removing the certificate from the publication record (108e) for the subscriber device (102, 104);
means for identifying other logged-in subscriber devices (102, 104) that previously designated the subscriber device (102, 104) for potential future secured instant messaging; and
means for notifying the identified other logged-in subscriber devices (102, 104) that the certificate for the subscriber device (102, 104) is withdrawn from use.

17. The messaging server of claim 16, comprising;
means for, responsive to a request from a first subscriber device (102, 104) to establish a dialog with a second subscriber device (102, 104), providing the first subscriber device (102, 104) with a representation of a certificate of the second subscriber device from the publication record (108e).

18. The messaging server of claim 16, comprising;
means for, responsive to a request to publish a new certificate received from the subscriber device (102, 104) providing the other logged-in subscriber devices (102, 104) with a representation of the new certificate.

19. The messaging server of claim 16, comprising;
means for, responsive to a request from a first subscriber device (102, 104) to establish a dialog with a second subscriber device (102, 104), denying provision of a certificate of the second subscriber device (102, 104) to the first subscriber device (102, 104) when the certificate of the second subscriber device (102, 104) has experienced one or more of the following actions: invalidity, revocation, un-publication.

20. The messaging server of claim 16, comprising:
responsive to a published certificate of a particular subscriber device (102, 104) becoming invalid, identifying other logged-in subscriber devices (102, 104) that previously designated the particular subscriber device for potential future secured instant messaging, and notifying the identified other subscriber devices (102, 104) of the published certificate of the particular subscriber device (102, 104).

21. The messaging server of claim 16, the means for temporarily storing the certificate in the publication record (108e) comprises means for storing a representation of a chain record pertaining to the certificate, where storage of repetitive chain records is abbreviated to conserve storage space.

22. The messaging server of claim 16, comprising:
means for, responsive to each request received from a logged-in subscriber device (102, 104) to un-publish an associated certificate, removing the associated certificate from the publication record (108e).

23. The messaging server of claim 16, comprising:
means for receiving revocation information for the certificate with the request to publish the certificate; and
means for, upon expiration of the certificate as indicated by the revocation information, removing the certificate from the publication record (108e).

## Patentansprüche

1. Verfahren zum Verwalten des Austauschs von sicheren Online-Sofortnachrichten zwischen Teilnehmergeräten (102, 104), wobei die sicheren Nachrichten unter Verwendung von digitalen Zertifikaten der Teilnehmer signiert und verschlüsselt werden, wobei das Verfahren die folgenden Schritte umfasst:
in einem Nachrichtenversand-Server (108a) erfolgendes Empfangen einer Zertifikatsanforderung von einem lokalen Sofortnachrichtenversandmodul (102a, 104a) einer Teilnehmervorrichtung (102, 104);
durch den Nachrichtenversand-Server erfolgendes Weiterleiten der Zertifikatsanforderung zu einer Registrierungsstelle und Senden eines digitalen Sicherheitszertifikats an die Teilnehmervorrichtung (102, 104) von der Registrierungsstelle (108c);
als Antwort auf eine Anmeldeaufforderung von mindestens einem Teilnehmer, eine Sitzung zum Austauschen synchroner Online-Nachrichten zu beginnen, durch den Nachrichtenversand-Server (108a) erfolgendes zeitweiliges Speichern des Zertifikats der Teilnehmervorrichtung in einem Veröffentlichungsdatensatz (108e) in Verbindung mit der Teilnehmervorrichtung (102, 104), solange das Sofortnachrichtenversandmodul (102a, 104a) beim Nachrichtenversand-Server (108a) angemeldet bleibt;
als Antwort auf vorgeschriebene Ereignisse durch den Nachrichtenversand-Server (108a) erfolgendes Versorgen angemeldeter Teilnehmervorrichtungen (102, 104) mit ausgewählter Information über Zertifikate anderer Teilnehmervorrichtungen (102, 104);
als Antwort darauf, dass die Teilnehmervorrichtung (102, 104) die Sitzung beendet, durch den Nachrichtenversand-Server (108a) erfolgendes automatisches Entfernen des Zertifikats aus dem Veröffentlichungsdatensatz (108a) für die Teilnehmervorrichtung (102, 104);
im Nachrichtenversand-Server (108a) erfolgendes Empfangen einer Aufforderung, die Veröffentlichung des Zertifikats im lokalen Sofortnachrichtenversandmodul (102a, 104a) der Teilnehmervorrichtung (102, 204) aufzuheben;
als Antwort auf das Empfangen der Aufforderung, die Veröffentlichung des Zertifikats aufzuheben, durch den Nachrichtenversand-Server (108a) erfolgendes Entfernen des Zertifikats aus dem Veröffentlichungsdatensatz (108e) für die Teilnehmervorrichtung (102, 104);
durch den Nachrichtenversand-Server (108a) erfolgendes Identifizieren anderer angemeldeter Teilnehmervorrichtungen (102, 104), die zuvor die Teilnehmervorrichtung (102, 104) für möglichen künftigen gesicherten Sofortnachrichtenversand benannt haben; und
Benachrichtigen der identifizierten anderen angemeldeten Teilnehmervorrichtungen (102, 104), dass das Zertifikat für die Teilnehmervorrichtung (102, 104) aus der Verwendung zurückgezogen wird.

2. Verfahren nach Anspruch 1, wobei die Operation des Versorgens angemeldeter Teilnehmervorrichtungen (102, 104) mit ausgewählter Information über Zertifikate anderer Teilnehmervorrichtungen (102, 104) als Antwort auf vorgeschriebene Ereignisse umfasst:
als Antwort auf eine Aufforderung einer Teilnehmervorrichtung (102, 104), einen Dialog mit einer anderen Teilnehmervorrichtung (102, 104) einzurichten, durch den Nachrichtenversand-Server (108a) erfolgendes Versorgen der auffordernden Teilnehmervorrichtung (102, 104) mit einer Darstellung eines digitalen Zertifikats der anderen Teilnehmervorrichtung (102, 104) aus dem Publikationsdatensatz (108e).

3. Verfahren nach Anspruch 1, wobei die Operation des Versorgens angemeldeter Teilnehmervorrichtungen (102, 104) mit ausgewählter Information über Zertifikate anderer Teilnehmervorrichtungen (102, 104) als Antwort auf vorgeschriebene Ereignisse umfasst:
als Antwort auf eine Aufforderung, ein von der Teilnehmervorrichtung (102, 104) empfangenes neues Zertifikat zu veröffentlichen, erfolgendes Versorgen der anderen angemeldeten Teilnehmervorrichtungen (102, 104) mit einer Darstellung des neuen Zertifikats.

4. Verfahren nach Anspruch 1, ferner umfassend:
durch die Teilnehmervorrichtung (102, 104) erfolgendes Einreichen der Aufforderung, die Veröffentlichung des Zertifikats aufzuheben, als Antwort auf mindestens eines der folgenden Ereignisse: (1) physische Nichtverfügbarkeit des Zertifikats, (2) logische Nichtverfügbarkeit des Zertifikats, (3) Benutzerentscheidung, die Veröffentlichung des Zertifikats aufzuheben.

5. Verfahren nach Anspruch 1, wobei die Operation des Versorgens angemeldeter Teilnehmervorrichtungen (102, 104) mit ausgewählter Information über Zertifikate anderer Teilnehmervorrichtungen (102, 104) als Antwort auf vorgeschriebene Ereignisse umfasst:
als Antwort auf eine Aufforderung von einer ersten Teilnehmervorrichtung (102, 104), einen Dialog mit einer zweiten Teilnehmervorrichtung (102, 104) einzurichten, durch den Nachrichtenversand-Server (108a) erfolgendes Verweigern der Bereitstellung eines Zertifikats der zweiten Teilnehmervorrichtung (102, 104) für die erste Teilnehmervorrichtung (102, 104), wenn das Zertifikat der zweiten Teilnehmervorrichtung (102, 104) eine oder mehrere der folgenden Aktionen erfahren hat: Ungültigkeit, Widerruf, Nicht-Veröffentlichung.

6. Verfahren nach Anspruch 1, ferner umfassend:
durch die Teilnehmervorrichtung (102, 104) erfolgendes Verzögern des Einreichens der Aufforderung, das Zertifikat für den Nachrichtenversand-Server (108a) zu veröffentlichen, unter verhindernden Umständen, die mindestens einen der folgenden Punkte einschließen: (1) physische Nichtverfügbarkeit des Zertifikats, (2) logische Nichtverfügbarkeit des Zertifikats, (3) Benutzerentscheidung, die Veröffentlichung des Zertifikats zu verzögern.

7. Verfahren nach Anspruch 6, ferner umfassend:
durch die Teilnehmervorrichtung (102, 104) erfolgendes automatisches Einreichen der Aufforderung, das Zertifikat zu veröffentlichen, wenn die verhindernden Umstände enden.

8. Verfahren nach Anspruch 1, wobei die Operation des Versorgens angemeldeter Teilnehmervorrichtungen (102, 104) mit ausgewählter Information über Zertifikate anderer Teilnehmervorrichtungen (102, 104) als Antwort auf vorgeschriebene Ereignisse umfasst:
als Antwort darauf, dass ein veröffentlichtes Zertifikat einer bestimmten Teilnehmervorrichtung (102, 104) ungültig wird, durch den Nachrichtenversand-Server (108a) erfolgendes Identifizieren anderer angemeldeter Teilnehmervorrichtungen (102, 104), die zuvor die bestimmte Teilnehmervorrichtung (102, 104) für möglichen künftigen gesicherten Sofortnachrichtenversand benannt haben, und Benachrichtigen der identifizierten anderen angemeldeten Teilnehmervorrichtungen (102, 104), dass das veröffentlichte Zertifikat der bestimmten Teilnehmervorrichtung (102, 104) ungültig wird.

9. Verfahren nach Anspruch 1, wobei die Operation des zeitweiligen Speicherns des Zertifikats zusätzlich eine Darstellung eines das Zertifikat betreffenden Kettendatensatzes speichert, wobei die Speicherung von sich wiederholenden Kettendatensätzen abgekürzt wird, um Speicherplatz zu sparen.

10. Verfahren nach Anspruch 1, wobei die Teilnehmervorrichtung (102, 104) das Einreichen der Aufforderung, das Zertifikat zu veröffentlichen, unter eine oder mehrere der folgenden Bedingungen stellt: (1) automatisch als Antwort auf das Anmelden beim Nachrichtenversand-Server (108a), (2) manuell als Antwort auf Bedieneranweisung.

11. Verfahren nach Anspruch 1, ferner umfassend:
in einer oder mehreren angemeldeten Teilnehmervorrichtungen (102, 104) durch ein zugehöriges lokales Sofortnachrichtenversandmodul (102a, 104a) erfolgendes Einreichen einer Aufforderung an den Nachrichtenversand-Server (108a), die Veröffentlichung eines zugehörigen Zertifikats als Antwort auf angegebene Bedingungen aufzuheben; und
als Antwort auf jede von einer angemeldeten Teilnehmervorrichtung (102, 104) empfangene Aufforderung, die Veröffentlichung eines zugehörigen Zertifikats aufzuheben, durch den Nachrichtenversand-Server (108a) erfolgendes Entfernen des zugehörigen Zertifikats aus dem Veröffentlichungsdatensatz (108e).

12. Verfahren nach Anspruch 1, ferner umfassend:
im Nachrichtenversand-Server (108a) erfolgendes Empfangen (506) von Widerrufsinformation für das Zertifikat mit der Aufforderung, das Zertifikat zu veröffentlichen; und
bei Ablauf des Zertifikats erfolgendes Entfernen des Zertifikats aus dem Veröffentlichungsdatensatz (108e), wie durch die Widerrufsinformation angegeben.

13. Verfahren nach Anspruch 1, ferner umfassend:
in einem lokalen Sofortnachrichtenversandmodul (102a, 104a) einer anderen Teilnehmervorrichtung (102, (104) erfolgendes Erlangen von Widerrufsinformation für das digitale Zertifikat, das der Teilnehmervorrichtung (102, 104) entspricht; und
durch den Nachrichtenversand-Server (108a) erfolgendes zeitweiliges Speichern der Widerrufsinformation im Veröffentlichungsdatensatz (108e) in Verbindung mit der Teilnehmervorrichtung (102, 104), solange das Sofortnachrichtenversandmodul (102a, 104a) der Teilnehmervorrichtung (102, 104) beim Nachrichtenversand-Server (108a) angemeldet bleibt.

14. Verfahren nach Anspruch 13, ferner umfassend:
durch das lokale Sofortnachrichtenversandmodul (102a, 104a) der anderen Teilnehmervorrichtung (102, 104) erfolgendes Speichern der Widerrufsinformation, solange das Zertifikat noch gültig ist; und
durch das lokale Sofortnachrichtenversandmodul (102a, 104a) der anderen Teilnehmervorrichtung (102, 104) erfolgendes Nutzen der Widerrufsinformation in künftigen Sitzungen, um zu vermeiden, dass die Widerrufsinformation von neuem erlangt werden muss, solange das Zertifikat noch gültig ist.

15. Verfahren nach Anspruch 1, ferner umfassend:
vor dem Teilnehmen an gesicherter Kommunikation mit einer anderen Teilnehmervorrichtung (102, 104) durch das lokale Sofortnachrichtenversandmodul (102a, 104a) erfolgendes Kommunizieren mit dem Nachrichtenversand-Server (108a), um zu bestimmen, ob ein Zertifikat der anderen Teilnehmervorrichtung (102, 104) gültig ist; und
durch das lokale Sofortnachrichtenmodul (102a, 104a) erfolgendes Unterlassen von gesicherter synchroner Kommunikation mit der anderen Teilnehmervorrichtung (102, 104), wenn das Zertifikat der anderen Teilnehmervorrichtung (102, 104) ungültig ist.

16. Nachrichtenversand-Server (108a), um einen Austausch von sicheren Online-Sofortnachrichten zwischen Teilnehmergeräten (102, 104) zu verwalten, wobei sichere Nachrichten unter Verwendung von digitalen Zertifikaten der Teilnehmer signiert und verschlüsselt werden, wobei der Nachrichtenversand-Server (108a) umfasst:
ein Mittel zum Empfangen einer Zertifikatsanforderung von einem lokalen Sofortnachrichtenversandmodul (102a, 104a) einer Teilnehmervorrichtung (102, 104);
ein Mittel zum Weiterleiten der Zertifikatsanforderung zu einer Registrierungsstelle und zum Senden eines digitalen Sicherheitszertifikats an die Teilnehmervorrichtung (102, 104) von der Registrierungsstelle (108c);
ein Mittel zum zeitweiligen Speichern des Zertifikats der Teilnehmervorrichtung in einem Veröffentlichungsdatensatz (108e) in Verbindung mit der Teilnehmervorrichtung (102, 104), solange das Sofortnachrichtenversandmodul (102a, 104a) beim Nachrichtenversand-Server (108a) angemeldet bleibt, und zwar als Antwort auf eine Anmeldeaufforderung von mindestens einem Teilnehmer, eine Sitzung zum Austauschen synchroner Online-Nachrichten zu beginnen;
ein Mittel zum Versorgen angemeldeter Teilnehmervorrichtungen (102, 104) mit ausgewählter Information über Zertifikate anderer Teilnehmervorrichtungen (102, 104) als Antwort auf vorgeschriebene Ereignisse;
ein Mittel zum automatischen Entfernen des Zertifikats aus dem Veröffentlichungsdatensatz (108a) für die Teilnehmervorrichtung (102, 104) als Antwort darauf, dass die Teilnehmervorrichtung (102, 104) die Sitzung beendet;
ein Mittel zum Empfangen einer Aufforderung, die Veröffentlichung des Zertifikats im lokalen Sofortnachrichtenversandmodul (102a, 104a) der Teilnehmervorrichtung (102, 204) aufzuheben;
ein Mittel zum Entfernen des Zertifikats aus dem Veröffentlichungsdatensatz (108e) für die Teilnehmervorrichtung (102, 104) als Antwort auf das Empfangen der Aufforderung, die Veröffentlichung des Zertifikats aufzuheben;
ein Mittel zum Identifizieren anderer angemeldeter Teilnehmervorrichtungen (102, 104), die zuvor die Teilnehmervorrichtung (102, 104) für möglichen künftigen gesicherten Sofortnachrichtenversand benannt haben; und
ein Mittel zum Benachrichtigen der identifizierten anderen angemeldeten Teilnehmervorrichtungen (102, 104), dass das Zertifikat für die Teilnehmervorrichtung (102, 104) aus der Verwendung zurückgezogen wird.

17. Nachrichtenversand-Server nach Anspruch 16, umfassend:
ein Mittel zum als Antwort auf eine Aufforderung von einer ersten Teilnehmervorrichtung (102, 104), einen Dialog mit einer zweiten Teilnehmervorrichtung (102, 104) einzurichten, erfolgenden Versorgen der ersten Teilnehmervorrichtung (102, 104) mit einer Darstellung eines digitalen Zertifikats der zweiten Teilnehmervorrichtung aus dem Publikationsdatensatz (108e).

18. Nachrichtenversand-Server nach Anspruch 16, umfassend:
ein Mittel zum als Antwort auf eine Aufforderung, ein von der Teilnehmervorrichtung (102, 104) empfangenes neues Zertifikat zu veröffentlichen, erfolgenden Versorgen der anderen angemeldeten Teilnehmervorrichtungen (102, 104) mit einer Darstellung des neuen Zertifikats.

19. Nachrichtenversand-Server nach Anspruch 16, umfassend:
ein Mittel zum als Antwort auf eine Aufforderung von einer ersten Teilnehmervorrichtung (102, 104), einen Dialog mit einer zweiten Teilnehmervorrichtung (102, 104) einzurichten, erfolgenden Verweigern der Bereitstellung eines Zertifikats der zweiten Teilnehmervorrichtung (102, 104) für die erste Teilnehmervorrichtung (102, 104), wenn das Zertifikat der zweiten Teilnehmervorrichtung (102, 104) eine oder mehrere der folgenden Aktionen erfahren hat: Ungültigkeit, Widerruf, Nicht-Veröffentlichung.

20. Nachrichtenversand-Server nach Anspruch 16, umfassend:
als Antwort darauf, dass ein veröffentlichtes Zertifikat einer bestimmten Teilnehmervorrichtung (102, 104) ungültig wird, erfolgenden Identifizieren anderer angemeldeter Teilnehmervorrichtungen (102, 104), die zuvor die bestimmte Teilnehmervorrichtung für möglichen künftigen gesicherten Sofortnachrichtenversand benannt haben, und Benachrichtigen der identifizierten anderen angemeldeten Teilnehmervorrichtungen (102, 104), von dem veröffentlichten Zertifikat der bestimmten Teilnehmervorrichtung (102, 104).

21. Nachrichtenversand-Server nach Anspruch 16, wobei das Mittel zum zeitweiligen Speichern des Zertifikats im Veröffentlichungsdatensatz (108e) ein Mittel zum Speichern einer Darstellung eines das Zertifikat betreffenden Kettendatensatzes umfasst, wobei die Speicherung von sich wiederholenden Kettendatensätzen abgekürzt wird, um Speicherplatz zu sparen.

22. Nachrichtenversand-Server nach Anspruch 16, umfassend:
ein Mittel zum als Antwort auf jede von einer angemeldeten Teilnehmervorrichtung (102, 104) empfangene Aufforderung, die Veröffentlichung eines zugehörigen Zertifikats aufzuheben, erfolgenden Entfernen des zugehörigen Zertifikats aus dem Veröffentlichungsdatensatz (108e).

23. Nachrichtenversand-Server nach Anspruch 16, umfassend:
ein Mittel zum Empfangen von Widerrufsinformation für das Zertifikat mit der Aufforderung, das Zertifikat zu veröffentlichen; und
ein Mittel zum Entfernen des Zertifikats aus dem Veröffentlichungsdatensatz (108e) bei Ablauf des Zertifikats, wie durch die Widerrufsinformation angegeben.

## Revendications

1. Procédé de gestion d'échange de messages instantanés en ligne sécurisés entre des dispositifs d'abonné (102, 104), dans lequel les messages sécurisés sont signés et cryptés en utilisant des certificats numériques d'abonnés, le procédé comprenant les étapes constituées par :
la réception, au niveau d'un serveur de messagerie (108a), d'une requête de certificat en provenance d'un module de messagerie instantanée local (102a, 104a) d'un dispositif d'abonné (102, 104) ;
le routage de la requête de certificat par le serveur de messagerie jusqu'à une autorité d'enregistrement et l'envoi d'un certificat de sécurité numérique sur le dispositif d'abonné (102, 104) depuis l'autorité d'enregistrement (108c) ;
en réponse à une requête de connexion en provenance d'au moins un abonné pour commencer une session d'échange de messages en ligne synchrones, le fait que le serveur de messagerie (108a) stocke temporairement le certificat du dispositif d'abonné dans un enregistrement de publication (108e) en association avec le dispositif d'abonné (102, 104) aussi longtemps que le module de messagerie instantanée (102a, 104a) reste connecté sur le serveur de messagerie (108a) ;
en réponse à des événements prescrits, le fait que le serveur de messagerie (108a) munit des dispositifs d'abonné connectés (102, 104) d'une information sélectionnée qui concerne des certificats d'autres dispositifs d'abonné (102, 104) ;
en réponse au fait que le dispositif d'abonné (102, 104) termine la session, le fait que le serveur de messagerie (108a) élimine automatiquement le certificat de l'enregistrement de publication (108e) pour le dispositif d'abonné (102, 104) ;
la réception, au niveau du serveur de messagerie (108a), d'une requête demandant de ne pas publier le certificat en provenance du module de messagerie instantanée local (102a, 104a) du dispositif d'abonné (102, 104) ;
en réponse à la réception de la requête demandant de ne pas publier le certificat, le fait que le serveur de messagerie (108a) élimine le certificat de l'enregistrement de publication (108e) pour le dispositif d'abonné (102, 104) ;
l'identification, par le serveur de messagerie (108a), d'autres dispositifs d'abonné connectés (102, 104) qui ont désigné au préalable le dispositif d'abonné (102, 104) pour une messagerie instantanée sécurisée future potentielle ; et
la notification aux autres dispositifs d'abonné connectés identifiés (102, 104) du fait que le certificat pour le dispositif d'abonné (102, 104) est retiré de toute utilisation.

2. Procédé selon la revendication 1, l'opération consistant à, en réponse à des événements prescrits, munir des dispositifs d'abonné connectés (102, 104) d'une information sélectionnée qui concerne des états de certificat d'autres dispositifs d'abonné (102, 104) comprenant :
en réponse à une requête en provenance d'un dispositif d'abonné (102, 104) demandant d'établir un dialogue avec un autre dispositif d'abonné (102, 104), le fait que le serveur de messagerie (108a) munisse le dispositif d'abonné formulateur de requête (102, 104) d'une représentation d'un certificat numérique de l'autre dispositif d'abonné (102, 104) à partir de l'enregistrement de publication (108e).

3. Procédé selon la revendication 1, l'opération consistant à, en réponse à des événements prescrits, munir des dispositifs d'abonné connectés (102, 104) d'une information sélectionnée qui concerne des états de certificat d'autres dispositifs d'abonné (102, 104) comprenant :
en réponse à une requête demandant de publier un nouveau certificat qui est reçue depuis le dispositif d'abonné (102, 104), le fait de munir les autres dispositifs d'abonné connectés (102, 104) d'une représentation du nouveau certificat.

4. Procédé selon la revendication 1, comprenant en outre :
la soumission, par le dispositif d'abonné (102, 104), de la requête demandant de ne pas publier le certificat en réponse à au moins l'un des événements qui suivent : (1) une non disponibilité physique du certificat, (2) une non disponibilité logique du certificat, (3) un choix fait par l'utilisateur de ne pas publier le certificat.

5. Procédé selon la revendication 1, l'opération consistant à, en réponse à des événements prescrits, munir des dispositifs d'abonné connectés (102, 104) d'une information sélectionnée qui concerne des états de certificat d'autres dispositifs d'abonné (102, 104) comprenant :
en réponse à une requête en provenance d'un premier dispositif d'abonné (102, 104) demandant d'établir un dialogue avec un second dispositif d'abonné (102, 104), le fait que le serveur de messagerie (108a) refuse de fournir un certificat du second dispositif d'abonné (102, 104) au premier dispositif d'abonné (102, 104) lorsque le certificat du second dispositif d'abonné (102, 104) a fait l'objet d'une ou de plusieurs des actions qui suivent : une invalidité, une révocation, une non publication.

6. Procédé selon la revendication 1, comprenant en outre :
le retardement, par le dispositif d'abonné (102, 104), d'une soumission de la requête demandant de publier le certificat au serveur de messagerie (108a) sous des circonstances préventives qui incluent au moins l'une des circonstances qui suivent : (1) (1) une non disponibilité physique du certificat, (2) une non disponibilité logique du certificat, (3) un choix fait par l'utilisateur de retarder la publication du certificat.

7. Procédé selon la revendication 6, comprenant en outre :
la soumission automatique, par le dispositif d'abonné (102, 104), de la requête demandant de publier le certificat lorsque les circonstances préventives sont levées.

8. Procédé selon la revendication 1, l'opération consistant à, en réponse à des événements prescrits, munir des dispositifs d'abonné connectés (102, 104) d'une information qui concerne des états de certificat d'autres dispositifs d'abonné (102, 104) comprenant :
en réponse au fait qu'un certificat publié d'un dispositif d'abonné particulier (102, 104) devient invalide, le fait que le serveur de messagerie (108a) identifie d'autres dispositifs d'abonné connectés (102, 104) qui ont désigné au préalable le dispositif d'abonné particulier (102, 104) pour une messagerie instantanée sécurisée future potentielle, et le fait qu'il notifie aux autres dispositifs d'abonné identifiés (102, 104) que le certificat publié du dispositif d'abonné particulier (102, 104) devient invalide.

9. Procédé selon la revendication 1, l'opération de stockage temporaire du certificat stockant de façon additionnelle une représentation d'un enregistrement en chaîne qui est relatif au certificat, dans lequel les enregistrements en chaîne répétitifs faisant l'objet d'un stockage sont contractés de manière à conserver de l'espace de stockage.

10. Procédé selon la revendication 1, le dispositif d'abonné (102, 104) conditionnant la soumission de la requête demandant de publier le certificat sur une ou plusieurs des conditions qui suivent : (1) de manière automatique en réponse à une connexion sur le serveur de messagerie (108a), (2) de façon manuelle en réponse à une directive d'opérateur.

11. Procédé selon la revendication 1, comprenant en outre :
au niveau d'un ou de plusieurs dispositif(s) d'abonné connecté(s) (102, 104), le fait qu'un module de messagerie instantanée local associé (102a, 104a) soumet au serveur de messagerie (108a) une requête demandant de ne pas publier un certificat associé en réponse à des conditions spécifiées ; et
en réponse à chaque requête demandant de ne pas publier un certifié associé qui est reçue depuis un dispositif d'abonné connecté (102, 104), le fait que le serveur de messagerie (108a) élimine le certificat associé de l'enregistrement de publication (108e).

12. Procédé selon la revendication 1, comprenant en outre :
la réception (506), au niveau du serveur de messagerie (108a), d'une information de révocation pour le certificat avec la requête demandant de publier le certificat ; et
suite à l'expiration du certificat comme indiqué par l'information de révocation, l'élimination du certificat de l'enregistrement de publication (108e).

13. Procédé selon la revendication 1, comprenant en outre :
l'obtention, au niveau d'un module de messagerie instantanée local (102a, 104a) d'un autre dispositif d'abonné (102, 104), d'une information de révocation pour le certificat numérique qui correspond au dispositif d'abonné (102, 104) ; et
le fait que le serveur de messagerie (108a) stocke temporairement l'information de révocation dans l'enregistrement de publication (108e) en association avec le dispositif d'abonné (102, 104) aussi longtemps que le module de messagerie instantanée (102a, 104a) du dispositif d'abonné (102, 104) reste connecté sur le serveur de messagerie (108a).

14. Procédé selon la revendication 13, comprenant en outre :
le stockage, par le module de messagerie instantanée local (102a, 104a) de l'autre dispositif d'abonné (102, 104), de l'information de révocation, aussi longtemps que le certificat est toujours valide ; et
l'utilisation, par le module de messagerie instantanée local (102a, 104a) de l'autre dispositif d'abonné (102, 104), de l'information de révocation lors de sessions futures afin d'éviter d'avoir à obtenir à nouveau l'information de révocation aussi longtemps que le certificat est toujours valide.

15. Procédé selon la revendication 1, comprenant en outre :
avant un engagement dans des communications sécurisées avec un autre dispositif d'abonné (102, 104), le fait que le module de messagerie instantanée local (102a, 104a) communique avec le serveur de messagerie (108a) de manière à déterminer si oui ou non un certificat de l'autre dispositif d'abonné (102, 104) est valide ; et
le fait que le module de messagerie instantanée local (102a, 104a) s'abstienne de réaliser des communications synchrones sécurisées avec l'autre dispositif d'abonné (102, 104) lorsque le certificat de l'autre dispositif d'abonné (102, 104) est invalide.

16. Serveur de messagerie (108a) pour gérer un échange de messages instantanés en ligne sécurisés entre des dispositifs d'abonné (102, 104), dans lequel des messages sécurisés sont signés et cryptés en utilisant des certificats numériques d'abonnés, le serveur de messagerie (108a) comprenant :
un moyen pour recevoir une requête de certificat en provenance d'un module de messagerie instantanée local (102a, 104a) d'un dispositif d'abonné (102, 104) ;
un moyen pour router la requête de certificat jusqu'à une autorité d'enregistrement et pour envoyer un certificat de sécurité numérique sur le dispositif d'abonné (102, 104) depuis l'autorité d'enregistrement (108c) ;
un moyen pour, en réponse à une requête de connexion en provenance d'au moins un abonné pour commencer une session d'échange de messages en ligne synchrones, stocker temporairement le certificat du dispositif d'abonné dans un enregistrement de publication (108e) en association avec le dispositif d'abonné (102, 104) aussi longtemps que le module de messagerie instantanée (102a, 104a) reste connecté sur le serveur de messagerie (108a) ;
un moyen pour, en réponse à des événements prescrits, munir des dispositifs d'abonné connectés (102, 104) d'une information sélectionnée qui concerne des certificats d'autres dispositifs d'abonné (102, 104) ;
un moyen pour, en réponse au fait que le dispositif d'abonné (102, 104) termine la session, éliminer automatiquement le certificat de l'enregistrement de publication (108e) pour le dispositif d'abonné (102, 104) ;
un moyen pour recevoir une requête demandant de ne pas publier le certificat en provenance du module de messagerie instantanée local (102a, 104a) du dispositif d'abonné (102, 104) ;
un moyen pour, en réponse à la réception de la requête demandant de ne pas publier le certificat, éliminer le certificat de l'enregistrement de publication (108e) pour le dispositif d'abonné (102, 104) ;
un moyen pour identifier d'autres dispositifs d'abonné connectés (102, 104) qui ont désigné au préalable le dispositif d'abonné (102, 104) pour une messagerie instantanée sécurisée future potentielle ; et
un moyen pour notifier aux autres dispositifs d'abonné connectés identifiés (102, 104) le fait que le certificat pour le dispositif d'abonné (102, 104) est retiré de toute utilisation.

17. Serveur de messagerie selon la revendication 16, comprenant :
un moyen pour, en réponse à une requête en provenance d'un premier dispositif d'abonné (102, 104) demandant d'établir un dialogue avec un second dispositif d'abonné (102, 104), munir le premier dispositif d'abonné (102, 104) d'une représentation d'un certificat du second dispositif d'abonné à partir de l'enregistrement de publication (108e).

18. Serveur de messagerie selon la revendication 16, comprenant :
un moyen pour, en réponse à une requête demandant de publier un nouveau certificat qui est reçue depuis le dispositif d'abonné (102, 104), munir les autres dispositifs d'abonné connectés (102, 104) d'une représentation du nouveau certificat.

19. Serveur de messagerie selon la revendication 16, comprenant :
un moyen pour, en réponse à une requête en provenance d'un premier dispositif d'abonné (102, 104) demandant d'établir un dialogue avec un second dispositif d'abonné (102, 104), refuser la fourniture d'un certificat du second dispositif d'abonné (102, 104) au premier dispositif d'abonné (102, 104) lorsque le certificat du second dispositif d'abonné (102, 104) a fait l'objet d'une ou de plusieurs des actions qui suivent : une invalidité, une révocation, une non publication.

20. Serveur de messagerie selon la revendication 16, comprenant :
en réponse au fait qu'un certificat publié d'un dispositif d'abonné particulier (102, 104) devient invalide, l'identification d'autres dispositifs d'abonné connectés (102, 104) qui ont désigné au préalable le dispositif d'abonné particulier (102, 104) pour une messagerie instantanée sécurisée future potentielle, et la notification aux autres dispositifs d'abonné identifiés (102, 104) du certificat publié du dispositif d'abonné particulier (102, 104).

21. Serveur de messagerie selon la revendication 16, le moyen pour stocker temporairement le certificat dans l'enregistrement de publication (108e) comprend un moyen pour stocker une représentation d'un enregistrement en chaîne qui est relatif au certificat, dans lequel les enregistrements en chaîne répétitifs faisant l'objet d'un stockage sont contractés de manière à conserver de l'espace de stockage.

22. Serveur de messagerie selon la revendication 16, comprenant :
un moyen pour, en réponse à chaque requête demandant de ne pas publier un certifié associé qui est reçue depuis un dispositif d'abonné connecté (102, 104), éliminer le certificat associé de l'enregistrement de publication (108e).

23. Serveur de messagerie selon la revendication 16, comprenant :
un moyen pour recevoir une information de révocation pour le certificat avec la requête demandant de publier le certificat ; et
un moyen pour, suite à l'expiration du certificat comme indiqué par l'information de révocation, éliminer le certificat de l'enregistrement de publication (108e).
